# EUROPEAN PATENT SPECIFICATION

(11) **EP 2 330 316 B1**
(45) Date of publication and mention of the grant of the patent: **12.06.2013**
(21) Application number: 09178105.4
(22) Date of filing: 04.12.2009
(51) Int. Cl.: F16D 25/061, F16H 3/54

(54) **Combined transmission system**
Kombiniertes Übertragungssystem
Système de transmission combiné

(43) Date of publication of application: 08.06.2011
(73) Proprietor: Turner Powertrain Systems Limited, Wolverhampton West Midlands WV6 0QT (GB)
(72) Inventor: Penksik, Sergei, Wolverhampton, West Midlands WV6 0QT (GB); Walker, Stuart, Wolverhampton, West Midlands WV6 0QT (GB)
(74) Representative: Modiano, Micaela Nadia

(56) References cited:
- DE-A1- 4 230 622
- GB-A- 967 799
- US-A- 2 174 672
- US-A1- 2004 266 576
- US-A1- 2007 049 451

## Description

### Technical Field

This disclosure generally relates to a transmission system for vehicles, such as off-highway machines. Particularly, this disclosure relates to a transmission system which provides several operating modes. More particularly, the disclosure relates to a transmission system which provides a direct drive mode, a crawler mode, an inching mode, a parking/braking mode and a neutral mode.

### Background

Drive systems comprising a planetary gear arrangement and at least two clutch packs are generally known, in particular in embodiments associated with applications for mobile vehicles. Such drive systems may be located within a stationary housing and may include a sun gear connected to an input member, a planetary gear set, a ring gear and at least two clutches which may be spring applied pressure release clutches.

US Patent No. 5,024,636 describes a planetary transmission located into a stationary housing and comprising a sun gear connected with an input member and rotating with it, a planet gear set including a planet carrier connected to an output for the transmission and a ring gear surrounding planet gears. The transmission comprises two spring applied pressure release clutch packs wherein the first clutch pack connects the planet carrier to the sun gear for rotation therewith and the second clutch pack connects the ring gear to the stationary housing. Moreover the transmission system comprises first means, including movable pistons, to disconnect the planet carrier from the sun gear and second means to disconnect the ring gear from the stationary housing. Operation means can alter the operative condition of transmission system according to the invention and provides a selectable ratios, braking and neutral conditions.

US Patent No. 7,537,536 describes a two speed gear box with a central planetary gear mount assembly comprising a sun gear driven by drive shaft, a plurality of planetary gears supported by planetary gear carrier and a ring gear. Moreover it comprises a low speed clutch assembly to selectively activate the ring gear and a high speed clutch assembly to selectively activate the sun gear; these two clutch assemblies are activated by hydraulically powered spring return pistons which are selectively activated to provide the desired operating speed mode.

The closest prior art document US2004/266576 describes a two speed gear box may have a casing that is rotatably supported by a central planetary gear carrier. The two speed gear box may include a central mounted planetary gear assembly with a ring gear controlled by a low speed clutch and a sun gear controlled by a high speed clutch that cooperate to provide three modes of operation for the output shaft with respect to a drive axle. The sun gear may be coupled to the carrier mount by a friction clutch to provide a high speed torque to the output shaft.

The present disclosure is directed, at least in part, to improving or overcoming one or more aspects of the prior art system.

### Brief Summary of the Invention

In a first aspect, the present disclosure describes a transmission system, particularly for vehicles, comprising a planetary gear arrangement having a sun gear connected to an input member, a planetary carrier connected with an output assembly and a set of planet gears coupled to a ring gear; and a friction clutch assembly to selectively couple the ring gear to a stationary housing characterised by a dog clutch assembly to selectively couple the sun gear to the output assembly.

In a second aspect, the present disclosure describes a method of operating a vehicle comprising a transmission system provided with a planetary gear arrangement having a sun gear connected to an input member, a planetary carrier connected with an output assembly and a set of planet gears coupled to a ring gear, a dog clutch assembly to selectively couple the sun gear to the output assembly; and a friction clutch assembly to selectively couple the ring gear to a stationary housing, the method comprising selectively engaging and disengaging the dog clutch assembly and the friction clutch assembly for selecting one of driving, crawling, inching, braking operative modes.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is an exploded view of the transmission system according to the present disclosure;
Fig. 2. is a cross-sectional view of the transmission system in the crawling mode according to the present disclosure.

This disclosure generally relates to a transmission system which provides several operating modes, in particular it may enable a direct drive mode, a crawler mode, an inching mode, a parking/braking mode and a neutral mode.

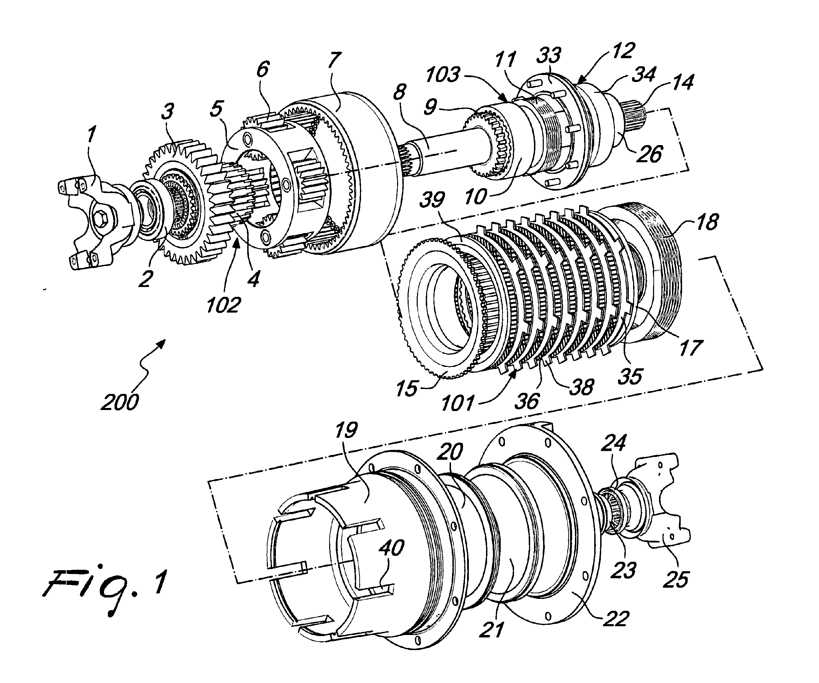

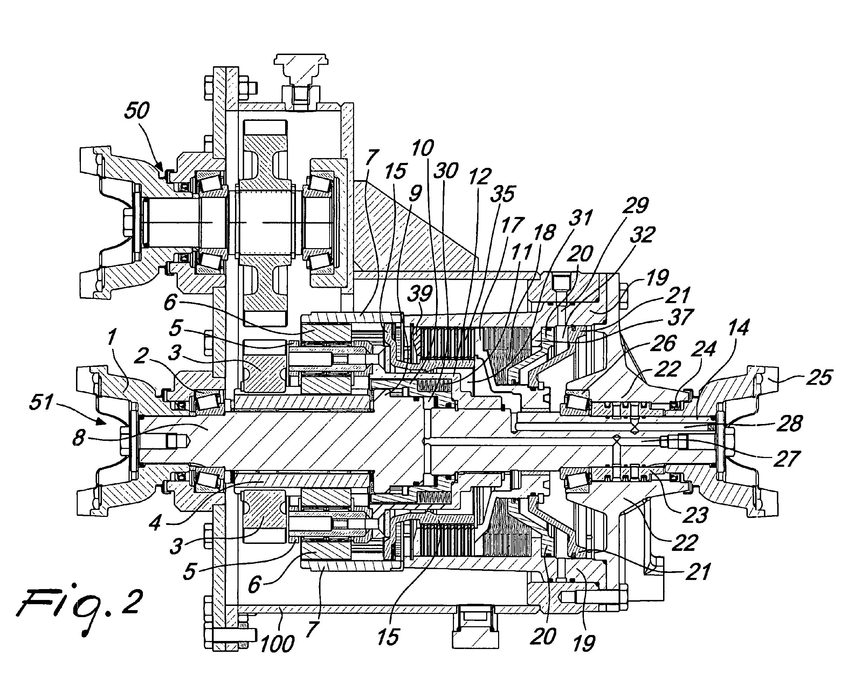

Figs. 1 and 2 show an embodiment of the transmission system according to the present disclosure. The transmission system, generally indicated as **200,** may include a planetary gear arrangement **102** comprising a sun gear **4,** a planetary carrier 5, planetary gears **6** and a ring gear **7.** The sun gear **4** may be connected with an input member **50,** such as a shaft or a gear running from the engine of the machine. The planetary carrier **5** may be connected with an output member or assembly **51.**

The transmission system **200** may also include two clutch assemblies: a dog clutch assembly **103** to selectively couple the sun gear **4** to the output assembly **51,** and a friction clutch assembly **101** to selectively couple the ring gear **7** to a stationary housing **19.**

In an embodiment, the transmission system **200** may be housed inside a containing case **100** which may act both as a container and as a support for the transmission system **200.** The containing case **100** may also house the input member **50.**

According to an embodiment of the invention, the transmission system **200** may comprise an input gear **3** which may be connected with the input member **50.** A sun gear **4** may be coupled with the input gear **3** such that the sun gear **4** may provide the drive input for the transmission system **200.**

The output assembly **51** may comprise an output shaft **8** which may pass through the centre of the sun gear **4** leaving a slack between them so that the rotation of the sun gear **4,** meshing directly with the input gear **3,** may not cause rotation of the output shaft **8.** One end of the output shaft **8** may pass through a bearing cone **2** and may connect to a first output yoke **1** while the other end of the output shaft **8** may have a toothed portion **14** which may connect to a second output yoke **25,** at which end there may be a sealing sleeve **23** and a lips seal **24.**

The set of planet gears **6** may be supported by the planetary carrier **5.** The planet gears **6** may mesh with the sun gear **4.**

At its middle portion the output shaft **8** may be connected to the dog clutch assembly **103.** The dog clutch assembly **103** comprises a dog clutch spline **9** which may connect with the output shaft **8** and which dog clutch spline **9** may be inserted inside a dog clutch sleeve **10.**

In an embodiment, the dog clutch assembly **103** may be spring applied. A wave spring **11** may be disposed between a cross section of the dog clutch sleeve **10** and the internal walls of a carrier to output shaft connector **12.** In this way, the dog clutch sleeve **10** may be spring loaded so as to push the dog clutch sleeve **10** into engagement with the sun gear **4.**

The carrier to output shaft connector **12** may be permanently connected with the output shaft **8** for a rotational interconnection thereto.

The carrier to output shaft connector **12** may be connected to the planetary carrier **5** through bolts for stable connection between them. Some bolts may also pass through the centre of planet gears **6** around which the planet gears **6** rotate. The lower part of the carrier to output shaft connector **12** is connected to the output shaft **8** so that the carrier to output shaft connector **12** fixes the planetary carrier **5** with the output shaft **8 .**

The planet gears **6** are connected to and mesh with the ring gear **7.** The ring gear **7** also surrounds and connects with the toothed external profile of the clutch hub **15.**

The friction clutch assembly **101** may be connected to the ring gear **7** by the clutch hub **15.**

The clutch hub **15** may be connected with a friction plate **39** which may rotate therewith.

The cylindrical body of the clutch hub **15** may comprise splines **36** which may be surrounded by a set of reaction plates **35.** These reaction plates **35** may slide on the splines **36** along the axial direction of the cylindrical body of the clutch hub **15** so that the reaction plate **39** may be come reciprocally closer or further. The friction plate **39** may be joined to the clutch hub **15** by splines **36.**

Tangs **38** may be attached to the external border of the reaction plates **35.** The tangs **38** may be movable along axial direction inside slots **40** of a stationary housing **19** which may house the friction clutch assembly **101.** The reaction plates **35** may be locked with the stationary housing **19** by means of tangs **38** inside the slots **40** which thereby prevents rotation of the reaction plates **35.**
A pusher plate **17** may be housed inside the stationary housing **19** and which may act on the reaction plates **35** so as to push each one into contact with the adjacent plate. The pusher plate **17** may produce the sliding movement of the reaction plates **35** in the slots **40.**

The friction clutch assembly **101,** which may comprise the set of reaction plates **35** and friction plate **39,** may be spring applied. A wave spring **18** may be placed between the pusher plate **17** and a cross section reduction **37** of the stationary housing **19.** The wave spring **18** may bias the pusher plate **17** against the reaction plates **35.** When the reaction plates **35** are in contact with the friction plate **39,** the friction clutch assembly **101** may be in the engaged condition.

More in details, when the friction clutch assembly **101** is in the engaged condition, the reaction plates **35,** which may be locked to the stationary housing **19,** may be pushed together and stacked such that they may arrive to be in contact with the friction plate **39** associated with friction clutch hub **15,** which may be inserted into the ring gear **7.** In this way the friction clutch assembly **101** may lock the ring gear **7** with the stationary housing **19.**

A closing plate **20** may abut on the cross section reduction **37** of the stationary housing **19.** The pusher plate **17** may be movable inside the circular space defined in the middle of the closing plate **20.**

A piston **21** may be axially spaced from the closing plate **20** and the lower part of the piston **21** may be attached to the base of pusher plate **17.**

The housing **19** may be sealed at an end by a cover **22.** The cover **22** may be coupled with the bearing cup **26** which may support the output shaft **8.**

In an embodiment, the dog clutch assembly **103** may be hydraulically controlled. A first fluid passage **27** providing the hydraulic fluid for the dog clutch assembly **103** may extend through the output shaft **8** and may communicate with a first chamber **30** which may be defined by the space between the dog clutch spline **9** and the shaft **8.**

In an embodiment, the friction clutch assembly **101** may be cooled. A second fluid passage **28** providing the fluid for the friction clutch assembly **101** may extend through the output shaft **8** and may communicate into a second chamber **31** which may be defined by the space between the pusher plate **17** and the carrier to output shaft connector **12.**

The operation of the friction clutch assembly **101** may be controlled by a proportional pressure reducing valve which may vary the pressure of fluid supplying the friction clutch assembly **101.**

More in details, the space comprised between the closing plate **20** and the piston **21** defines a third chamber **32** wherein the fluid for the friction clutch assembly **101** arrives through the third fluid passage **29** located inside the stationary housing **19.**

The pressure reducing valve may be connected to the third fluid passage **29** to control the pressure of the fluid inside the third chamber **32** and thereby the disengagement of the pusher plate **17** from the reaction plates **35.** The reaction plates **35** may be disconnected from the friction plate **39.**

The dog clutch assembly **103** may act in an engagement condition or in a disengagement condition.

In the engagement condition fluid inside the first chamber **30** may not be pressurised which may allow the wave spring **11** to push the dog clutch sleeve **10** toward the sun gear **4** and for engagement thereto.

In the dog clutch assembly **103** disengagement condition, the pressurized fluid in the first chamber **30** may produce a hydraulic pressure which may act against the thrust of the dog clutch wave spring **11.** This hydraulic pressure may push the dog clutch sleeve **10** inside the carrier to output shaft connector **12** and to disengage the sun gear **4** from the output shaft **8.** So, in this condition, the sun gear **4** may not be directly engaged with the output shaft **8.**

The friction clutch assembly **101** may have an engagement condition and a disengagement condition.

In the friction clutch assembly **101** engagement condition there may be not pressurized fluid inside the third chamber **32** so the wave spring **18** may push the pusher plate **17** against the reaction plates **35** to stack these plates **35** against the friction plate **39.** As the friction plate **39** may be permanently connected with the clutch hub **15,** the ring gear **7** may be locked to the stationary housing **19** via the contact of reaction plates **35** with the friction plate **39.**

In the friction clutch assembly **101** full disengagement condition a pressurized fluid inside the third chamber **32** may act against the thrust of the wave spring **18** to move the piston **21** and the pusher plate **17** moved away from the friction plate **39.** The reaction plates **35** may space away from the adjacent reaction plates **35** and may not be in contact with the friction plate **39.** So the ring gear **7** may be free to rotate.

Due to the presence of a proportional pressure reducing valve, the friction clutch assembly **101** according to the invention may also have a controlled disengagement condition.

In the controlled disengagement condition the pressure of the fluid through the passage **29** in the chamber **32** may be controlled by the proportional pressure reducing valve. The pressure reducing valve may progressively increase the hydraulic pressure which may act against the thrust of the spring wave friction clutch **18** in order that the disengagement of the stationary housing **19** from the ring gear **7** may be controlled. In this way the reaction plates **35,** sliding on the splines **36,** may be moved away from the friction plate **39** in a controlled manner so the ring gear **7** may be not locked to the stationary housing **19** but it may slip.

In an alternative the pressure reducing valve may also progressively decrease the hydraulic pressure which may enable the thrust of the spring wave friction clutch **18** to act on the pusher **17** for the controlled engagement of the stationary housing **19** with the ring gear **7.** In this way the reaction plates **35,** sliding on the splines **36,** may be moved toward the friction plate **39** in a controlled manner so the ring gear **7** may be locked to the stationary housing **19.** Slipping of the ring gear **7** may occur.

Both dog clutch assembly **103** and the friction clutch assembly **101** may be normally spring applied during the engagement mode while they may be hydraulically pressurized for their disengagement.

In an embodiment, in order to have only two conditions (engagement/disengagement) for the dog clutch assembly **103,** the dog clutch valve may be of the on/off type. When the dog clutch valve is closed, there may be no pressurized fluid into the first chamber **30** and the dog clutch assembly **103** may be engaged. When the dog clutch valve is opened, the pressurized fluid in the first chamber **30** may act against the wave spring dog clutch **11** providing disengagement of the dog clutch sleeve **10** from the sun gear **4.**

The friction clutch assembly **101** may be controlled by the proportional pressure reducing valve. In particular, the linear part of the pressure reducing range of the valve may be used and it means that the regulation action of the valve may be controlled in a such way that the pressure of the fluid, which may act against the thrust of the wave spring friction clutch **18,** may vary linearly.

The proportional pressure reducing valve may be connected with a controller device, for example an electronic control unit (ELU).

The controller device may receive input from the user and it may be suitably programmed to produce output signal which may actuate the proportional pressure reducing valve and the dog clutch valve

In an embodiment, proportional pressure reducing valve and the dog clutch valve may be both electromechanical valves wherein its opening or closing may be associated to electric current through a solenoid coil. The output signal from the controller device may operate the solenoid of the proportional pressure reducing valve and the solenoid of the dog clutch valve.

The signal provided by the user to the controller device may comprise both on/off signals which may be associated with a switch and signals proportional to the movement of an actuation lever, for example the displacement of a foot pedal.

More particularly, the controller device may translate the signal proportional to the displacement of the foot pedal into an output signal for the proportional reducing valve which may increase linearly and progressively the fluid pressure in the friction clutch chamber **32** so that the friction clutch assembly **101** may be disengaged in a controlled way.

The combination of the engagement and disengagement conditions for the dog clutch assembly **103** and for the friction clutch assembly **101** may provide a transmission system **200** with five different operational modes, particularly they may be a direct drive mode, a crawler mode, an inching mode, a parking mode and a neutral mode.

The direct drive mode may be the normal operating mode of the transmission system **200** wherein no speed reduction is transmitted from the input member **50** to the output member **51.** In this operational mode the dog clutch assembly **103** may be in an engagement condition while the friction clutch assembly **101** may be in a disengagement condition.

The crawler mode is the operating mode of the transmission system **200** wherein there is a speed reduction on the output member. In this operational mode the dog clutch assembly **103** may be in the disengagement condition, so no direct drive may be carried to the output member **51,** while the friction clutch assembly **101** may be in the engagement condition. In detail, the sun gear **4** associated with the input member **50** may rotate without a direct connection to the output member **51.** The ring gear **7** may be locked to the stationary housing **19,** so the planetary carrier **5** associated with the output member **51** may rotate with a reduced speed.

In the inching mode, the dog clutch assembly **103** may be in the disengagement condition while the friction clutch assembly **101** may work in a controlled condition; in particular, the friction clutch assembly **101** disengaging progressively may bring a controlled slip of reaction plates **35** which may provide any speed from the creeper speed to the zero speed.

In the parking mode both the dog clutch assembly **103** and the friction clutch assembly **101** may be in the engagement condition and this operating mode provide a braking function and an emergency stop.

In the neutral mode both the dog clutch assembly **103** and the friction clutch assembly **101** may be in the disengagement condition.

The controller device may receive an input relating to the speed of the output shaft **8** to inhibit the engagement of the crawler mode whilst the machine is moving.

The friction clutch assembly **103** may be disengaged prior to the dog clutch assembly **101** disengagement so that the output shaft **8** may be locked to avoid the roll away of the machine. In detail, if the transmission system **1** is locked by both clutches being engaged with the springs and if either the forwards or reverse clutch in the main transmission is simultaneously engaged, as the friction clutch assembly **103** is disengaged then the machine will pull away without rolling back, that is the main transmission clutch will take up the drive as the friction assembly **103** disengages. This assumes that the main transmission is driven by a torque converter which will prevent the engine stalling.

### Industrial Applicability

This disclosure describes a transmission system **200** providing several operating modes for vehicles, particularly for small off-highway machines.

In operation a switch may provide an input to the controller device which may emit output signals for operation of the solenoid of the dog clutch valve and the solenoid of the proportional pressure reduction valve associated with the friction clutch assembly **101.**

In direct drive mode, the dog clutch valve may be closed so no hydraulic pressure may be applied to the dog clutch assembly **103** and the dog clutch wave spring **11** may bias the dog clutch sleeve **10** to engage the sun gear **4** to lock this latter with the planetary gear carrier 5.The proportional pressure reducing valve may be fully opened so that the hydraulic pressure of the fluid may disengage the friction clutch assembly **101.** As a result of locking the sun gear **4** to the planetary gear carrier **5,** the gear ratio between the input member 50 and the output member **51** may be 1:1 so there may be no speed reduction between the input and output.

In the crawler mode, the proportional pressure reducing valve may be fully closed so the hydraulic pressure may be released from the friction clutch assembly **101** for the engagement by means of the friction clutch wave spring **11;** the dog clutch valve may be opened so the hydraulic pressure may be applied to the dog clutch assembly **103** to disengage it. In this way the output shaft **8** may be driven by the planetary gear carrier **5** so a speed reduction may be achieved.

When the transmission system **200** is in the crawler mode, the user by means of his/her action on the foot pedal may control the inching mode. The controller device may translate the signal provided by the user pushing down the foot pedal into a command to the solenoid of the proportional pressure reduction valve associated with the friction clutch assembly **101.** This valve progressively may increase the pressure in the friction clutch assembly **101** so that it may progressively disengage. The slippage of the reaction plates **35** may provide the inching function which enables the slow movement of the off-highway machine forward or backwards for a short distance in an easily controllable manner.

When the foot pedal reaches the bottom of its travel, the dog clutch assembly **103** may be engaged and, after a short interval, the friction clutch assembly **101** may be engaged and simultaneously the input transmission clutch may be disengaged by the engine so that the parking brake mode may be achieved. Upon releasing the foot pedal, the friction clutch assembly **101** may be disengaged and then the dog clutch assembly **103** may be re-engaged and the input transmission clutch may be re-engaged with the engine.

To pass from the direct drive mode to the parking mode, the dog clutch assembly **103** may be already engaged while the friction clutch assembly **101** may be engaged.

To pass from the crawler or inching mode to the parking mode, firstly the friction clutch assembly **101** may be momentarily disengaged, secondly the dog clutch assembly **103** may be engaged and finally the friction clutch assembly **101** may be re-engaged.

When both the dog clutch assembly **103** and the friction clutch assembly **101** are disengaged, the transmission system **200** may be in the neutral mode and this mode may be suitable for the attachment of a power-take-off (PTO) to be driven by the transmission system **200** while the machines wheel are disconnected

Thus, the transmission system according to the invention may enable the combination of five different operating modes into a single drive assembly unit, thereby may save space and may enable it to be fitted into small mechanical transmissions.

Moreover, particularly in small off-highway machines, the transmission system according to the invention may enable to inch the vehicle forward or backward over a short distance in an easily controllable manner. Further, the transmission system according to the invention may enable in the crawler mode the movement of the vehicle at low output speed but with high engine input speed to enable an attachment to be driven with full power. The transmission system according to the invention may enable fail safe parking and a secondary brake.

By suitable control of the input transmission clutches a hill start feature may be engineered.

The industrial applicability of the transmission system as described herein will have been readily appreciated from the foregoing discussion.

## Claims

1. A transmission system (200), particularly for vehicles, comprising:
a planetary gear arrangement (102) having a sun gear (4) connected to an input member (50), a planetary carrier (5) connected with an output assembly (51) and a set of planet gears (6) coupled to a ring gear (7); and
a friction clutch assembly (101) to selectively couple the ring gear (7) to a stationary housing (19),
**characterised by** a dog clutch assembly (103) to selectively couple the sun gear (4) to the output assembly (51).

2. The transmission system (200) according to claim 1 wherein it comprises a regulator to variably control the application of the ring gear (7) to the stationary housing (19).

3. The transmission system (200) according to claim 1 wherein the regulator is a proportional pressure reducing valve arranged between the friction clutch assembly (101) and a control device.

4. The transmission system (200) according to claim 1 wherein the linear part of pressure range of the proportional pressure reducing valve is used by the control device to operate the friction clutch assembly.

5. The transmission system (200) according to any of the preceding claims wherein the controller device provides a command to the proportional pressure reducing valve which is related to a signal provided by a user.

6. The transmission system (200) according to claim 5 wherein the signal provided by the user is the travel of a foot pedal.

7. The transmission system (200) according to claim 5 or 6 wherein the dog clutch assembly (103) is hydraulically controlled by a dog clutch valve of on/off type and commanded by the controller device.

8. The transmission system (200) according to any of the preceding claims wherein:
- a braking mode is provided when the dog clutch assembly (103) and the friction clutch assembly (101) are engaged;
- a crawler mode is provided when the dog clutch assembly (103) is disengaged and the friction clutch assembly (101) is fully engaged; and
- an inching mode when the dog clutch assembly (103) is disengaged and the friction clutch assembly (101) is partially disengaged.

9. The transmission system (200) according to any of the preceding claims further comprising a direct drive operative mode wherein the dog clutch assembly (103) is engaged and the friction clutch assembly (101) is fully disengaged.

10. A vehicle comprising a transmission system (200) according to anyone of the proceeding claims.

11. A method of operating a vehicle comprising a transmission system (200) provided with a planetary gear arrangement (102) having a sun gear (4) connected to an input member (50), a planetary carrier (5) connected with an output assembly (51) and a set of planet gears 86) coupled to a ring gear (7), a dog clutch assembly (103) to selectively couple the sun gear (4) to the output assembly (51); and a friction clutch assembly (101) to selectively couple the ring gear (7) to a stationary housing (19), the method comprising selectively engaging and disengaging the dog clutch assembly (103) and the friction clutch assembly (101) for selecting one of driving, crawling, inching, braking operative modes.

12. The method of claim 11, comprising selecting a driving mode by:
- engaging the dog clutch assembly (103); and
- disengaging the friction clutch assembly (101).

13. The method of claim 11, comprising selecting a crawling mode by:
- disengaging the dog clutch assembly (103); and
- fully engaging the friction clutch assembly (101).

14. The method of claim 11, comprising selecting an inching mode by:
- disengaging the dog clutch assembly (103); and
- partially disengaging the friction clutch assembly (101) to cause proportional slipping of the friction clutch.

15. The method of claim 11, comprising selecting a braking mode by:
- engaging the dog clutch assembly (103); and
- fully engaging the friction clutch assembly (101).

## Patentansprüche

1. Ein Übertragungssystem (200), insbesondere für Fahrzeuge, Folgendes umfassend:
eine Planetengetriebeanordnung (102) umfassend: ein Sonnenrad (4), das mit einem Eingangsglied (50) verbunden ist, einen Planetenradträger (5), der mit einem Ausgangsaggregat (51) verbunden ist, und einen Satz von Planetenrädern (6), die mit einem Hohlrad (7)gekoppelt sind; und
einen Rutschkupplungsaufbau (101) zur selektiven Kopplung des Hohlrads (7) mit einem stationären Gehäuse (19), **gekennzeichnet durch** einen Klauenkupplungsaufbau (103) zur selektiven Kopplung des Sonnenrades (4) mit dem Ausgangsaggregat (51).

2. Das Übertragungssystem (200) gemäß Anspruch 1, wobei es einen Regler zu einer variablen Steuerung der Anwendung des Hohlrads (7) auf das stationäre Gehäuse (19) umfasst.

3. Das Übertragungssystem (200) gemäß Anspruch 1, wobei der Regler ein proportionales Druckverminderungsventil ist, angeordnet zwischen dem Rutschkupplungsaufbau (101) und einer Steuervorrichtung.

4. Das Obertragungssystem (200) gemäß Anspruch 1, wobei der lineare Teil des proportionalen Druckverminderventils von der Steuervorrichtung verwendet wird, um den Rutschkupplungsaufbau zu betätigen.

5. Das Übertragungssystem (200) gemäß einem beliebigen der vorstehenden Ansprüche, wobei die Steuervorrichtung einen Befehl an das proportionale Druckverminderventil sendet, der mit einem von einem Benutzer gesendeten Signal verbunden ist.

6. Das Übertragungssystem (200) gemäß Anspruch 5, wobei das vom Benutzer gesendete Signal der Weg eines Pedals ist.

7. Das Übertragungssystem (200) gemäß Anspruch 5 oder 6, wobei der Klauenkupplungsaufbau (103) hydraulisch von einem Klauenkupplungsventil eines Ein-Aus-Typs gesteuert und von der Steuervorrichtung befehligt wird.

8. Das Übertragungssystem (200) gemäß einem beliebigen der vorstehenden Ansprüche, wobei
- ein Bremsmodus bereitgestellt wird, wenn der Klauenkupplungsaufbau (103) und der Rutschkupplungsaufbau (101) eingekuppelt sind,
- ein Kriechmodus bereitgestellt wird, wenn der Klauenkupplungsaufbau (103) ausgekuppelt und der Rutschkupplungsaufbau (101) vollständig eingekuppelt ist, und
- ein Tippmodus, wenn der Klauenkupplungsaufbau (103) ausgekuppelt und der Rutschkupplungsaufbau (101) teilweise ausgekuppelt ist.

9. Das Übertragungssystem (200) gemäß einem beliebigen der vorstehenden Ansprüche, das weiter eine Direktgang-Betriebsart umfasst, in der der Klauenkupplungsaufbau (103) eingekuppelt ist und der Rutschkupplungsaufbau (101) vollständig ausgekuppelt ist.

10. Ein Fahrzeug, das ein Übertragungssystem (200) gemäß einem beliebigen der vorstehenden Ansprüche umfasst.

11. Ein Verfahren zum Betrieb eines Fahrzeugs, das ein Übertragungssystem (200) umfasst, ausgestattet mit einer Planetengetriebeanordnung (102) umfassend ein Sonnenrad (4), das mit einem Eingangsglied (50) verbunden ist, einen Planetenradträger (5), der mit einem Ausgangsaggregat (51) verbunden ist, und einen Satz von Planetenrädern (6), die mit einem Hohlrad (7) gekoppelt sind, einen Klauenkupplungsaufbau (103) zur selektiven Kopplung des Sonnenrades (4) mit dem Ausgangsaggregat (51); und einen Rutschkupplungsaufbau (101) zur selektiven Kopplung des Hohlrads (7) mit einem stationären Gehäuse (19), wobei das Verfahren Folgendes umfasst:
selektives Einkuppeln und Auskuppeln des Klauenkupplungsaufbaus (103) und des Rutschkupplungsaufbaus (101) zur Auswahl einer der Modi: Fahren, Kriechen, Tippen, Bremsen.

12. Das Verfahren gemäß Anspruch 11, umfassend die Auswahl eines Fahrmodus durch:
- Einkuppeln des Klauenkupplungsaufbaus (103); und
- Auskuppeln des Rutschkupplungsaufbaus (101).

13. Das Verfahren gemäß Anspruch 11, umfassend die Auswahl eines Kriechmodus durch:
- auskuppeln des Klauenkupplungsaufbaus (103); und
- vollständiges Einkuppeln des Rutschkupplungsaufbaus (101).

14. Das Verfahren gemäß Anspruch 11, umfassend die Auswahl eines Tippmodus durch:
- Auskuppeln des Klauenkupplungsaufbaus (103); und
- teilweises Auskuppeln des Rutschkupplungsaufbaus (101), um ein proportionales Rutschen der Rutschkupplung zu verursachen.

15. Das Verfahren gemäß Anspruch 11, umfassend die Auswahl eines Bremsmodus durch:
- Einkuppeln des Klauenkupplungsaufbaus (103); und
- vollständiges Einkuppeln des Rutschkupplungsaufbaus (101).

## Revendications

1. Système de transmission (200), en particulier pour véhicules, comprenant :
un agencement d'engrenages planétaires (102) comportant un planétaire (4) connecté à un élément d'entrée (50), un support planétaire (5) connecté à un ensemble de sortie (51) et un ensemble de roues planétaires (6) accouplées à une couronne (7) ; et
un ensemble d'embrayage à friction (101) pour accoupler sélectivement la couronne (7) à un boîtier fixe (19),
**caractérisé par** un ensemble d'embrayage à crabots (103) pour accoupler sélectivement le planétaire (4) à l'ensemble de sortie (51).

2. Système de transmission (200) selon la revendication 1, dans lequel il comprend un régulateur pour commander de façon variable l'application de la couronne (7) sur le boîtier fixe (19).

3. Système de transmission (200) selon la revendication 1, dans lequel le régulateur est un détendeur à pression proportionnelle placé entre l'ensemble d'embrayage à friction (101) et un dispositif de commande.

4. Système de transmission (200) selon la revendication 1, dans lequel la partie linéaire de la plage de pressions du détendeur à pression proportionnelle est utilisée par le dispositif de commande pour faire fonctionner l'ensemble d'embrayage à friction.

5. Système de transmission (200) selon l'une quelconque des revendications précédentes, dans lequel le dispositif de commande fournit une commande au détendeur à pression proportionnelle qui est liée à un signal fourni par un utilisateur.

6. Système de transmission (200) selon la revendication 5, dans lequel le signal fourni par l'utilisateur est la course d'une pédale.

7. Système de transmission (200) selon la revendication 5 ou 6, dans lequel l'ensemble d'embrayage à crabots (103) est commandé de façon hydraulique par une vanne d'embrayage à crabots du type marche/arrêt et commandée par le dispositif de commande.

8. Système de transmission (200) selon l'une quelconque des revendications précédentes, dans lequel :
- un mode de freinage est fourni quand l'ensemble d'embrayage à crabots (103) et l'ensemble d'embrayage à friction (101) sont en prise ;
- un mode de chenille est fourni quand l'ensemble d'embrayage à crabots (103) est débrayé et l'ensemble d'embrayage à friction (101) est complètement en prise ; et
- un mode progressif quand l'ensemble d'embrayage à crabots (103) est débrayé et l'ensemble d'embrayage à friction (101) est partiellement débrayé.

9. Système de transmission (200) selon l'une quelconque des revendications précédentes, comprenant en outre un mode de fonctionnement en prise directe dans lequel l'ensemble d'embrayage à crabots (103) est en prise et l'ensemble d'embrayage à friction (101) est complètement débrayé.

10. Véhicule comprenant un système de transmission (200) selon l'une quelconque des revendications précédentes.

11. Procédé de conduite d'un véhicule comprenant un système de transmission (200) pourvu d'un agencement d'engrenages planétaires (102) comportant un planétaire (4) connecté à un élément d'entrée (50), un support planétaire (5) connecté à un ensemble de sortie (51) et un ensemble de roues planétaires (6) accouplées à une couronne (7), un ensemble d'embrayage à crabots (103) pour accoupler sélectivement le planétaire (4) à l'ensemble de sortie (51), et un ensemble d'embrayage à friction (101) pour accoupler sélectivement la couronne (7) à un boîtier fixe (19), le procédé comprenant la mise en prise et le débrayage sélectifs de l'ensemble d'embrayage à crabots (103) et de l'ensemble d'embrayage à friction (101) pour sélectionner un mode de fonctionnement parmi des modes de conduite, de chenille, progressif et de freinage.

12. Procédé selon la revendication 11, comprenant la sélection d'un mode de conduite par les opérations suivantes :
- mettre en prise l'ensemble d'embrayage à crabots (103) ; et
- débrayer l'ensemble d'embrayage à friction (101).

13. Procédé selon la revendication 11, comprenant la sélection d'un mode de chenille par les opérations suivantes :
- débrayer l'ensemble d'embrayage à crabots (103) ; et
- mettre complètement en prise l'ensemble d'embrayage à friction (101).

14. Procédé selon la revendication 11, comprenant la sélection d'un mode progressif par les opérations suivantes :
- débrayer l'ensemble d'embrayage à crabots (103) ; et
- débrayer partiellement l'ensemble d'embrayage à friction (101) pour provoquer un patinage proportionnel de l'embrayage à friction.

15. Procédé selon la revendication 11, comprenant la sélection d'un mode de freinage par les opérations suivantes :
- mettre en prise l'ensemble d'embrayage à crabots (103) ; et
- mettre complètement en prise l'ensemble d'embrayage à friction (101).
